# EUROPEAN PATENT SPECIFICATION

(11) **EP 4 300 090 B1**
(45) Date of publication and mention of the grant of the patent: **16.07.2025**
(21) Application number: 22911563.9
(22) Date of filing: 21.10.2022
(51) Int. Cl.: G01N 27/30, G01N 27/416, H01M 4/13, H01M 10/058, H01M 50/105, H01M 50/569, H01M 10/0525, H01M 10/0585, H01M 10/48, H01M 10/42

(54) **THREE-ELECTRODE CELL AND SYSTEM FOR PERFORMANCE ANALYSIS USING SAME**
DREIELEKTRODENZELLE UND SYSTEM ZUR LEISTUNGSANALYSE DAMIT
CELLULE À TROIS ÉLECTRODES ET SYSTÈME D'ANALYSE DE PERFORMANCE L'UTILISANT

(30) Priority: 20.12.2021 KR 20210182857; 13.10.2022 KR 20220131188
(43) Date of publication of application: 03.01.2024
(73) Proprietor: LG Energy Solution, Ltd., Seoul 07335 (KR)
(72) Inventor: LEE, Solnip, Daejeon 34122 (KR)
(74) Representative: Goddar, Heinz J.
(86) International application number: PCT/KR2022/016125
(87) International publication number: WO 2023/120924

(56) References cited:
- CN-A- 111 063 939
- KR-A- 20170 021 630
- KR-A- 20170 021 630
- KR-B1- 100 398 173
- KR-B1- 102 021 895
- KR-B1- 102 099 908
- US-A1- 2019 126 770
- US-A1- 2019 126 770

## Description

### Technical Field

The present disclosure relates to a three-electrode battery and a performance analysis system using the same, and relates to a three-electrode battery in which electrode pitting and internal short-circuits are suppressed, and a performance analysis system using the same.

### Background Art

A three-electrode analysis system using a reference electrode is mainly used for the cathode/anode separation analysis of a secondary battery. In a conventional three-electrode system, a thin copper wire coated with an LTO (Li₄Ti₅O₁₂) active material is used as a reference electrode.

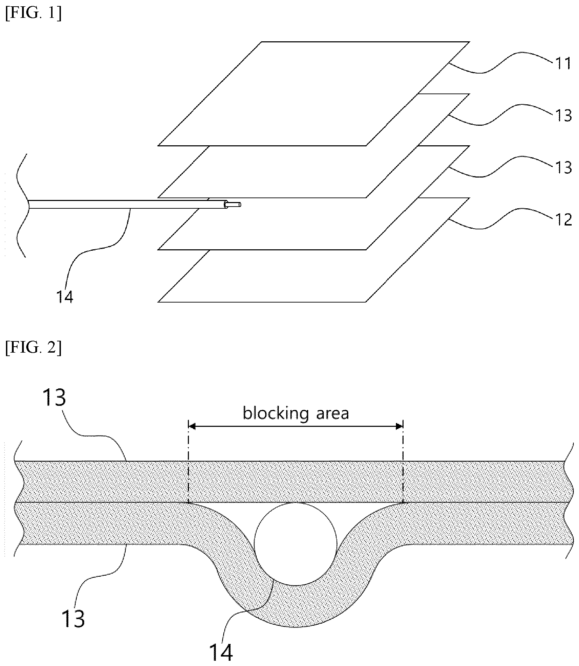

Specifically, as shown in FIG. 1, in the three-electrode battery, a Cu wire coated with an LTO active material may be inserted as a reference electrode 14 into a separator 13 stacked between a cthode 11 and an anode 12. More specifically, the separator 13 between the cathode 11 and the anode 12 is provided in two layers, and the reference electrode 14 may be located between the two layers of the separator 13.

At this time, when a wire-type reference electrode is used, as shown in FIG. 2, due to the shape of the reference electrode 14, a blocking area is generated, and thus an unreacted area is formed, making it difficult to perform accurate cathode/anode separation analysis.

Depending on the stiffness or thickness of the electrode itself, the size of the blocking area may be enlarged and become a problem, and in particular, when the pressure increases in the area where the reference electrode is located due to the increase in the internal pressure of the battery due to the increase in the thickness of the electrode and the generation of gas generated while the battery is operating, damage to the electrode and the separator may occur.

Therefore, there is a need for a technology for a battery or system capable of stable three-electrode analysis regardless of the electrode's own properties and whether or not the electrode is operated.

KR 2017 0 021 630 A relates to a method of estimating a battery charge limit in order not to cause Li-plating, and a battery charging method and apparatus capable of quickly charging the battery are provided. The method for estimating a battery charge limit according to the present invention includes (a) a step of fabricating a three electrode cell having a unit cell and a reference electrode; (b) a step of measuring an anode potential (CCV) according to SOC while charging the three electrode cell; and (c) a step of setting a point at which a negative electrode potential starts to become constant without falling, as a point of occurrence of Li-plating, and setting it as a charging limit.

US 2019/126 770 A1 discloses a battery management systems with control logic for battery state estimation (BSE), methods for making/using/assembling a battery cell with a reference electrode, and electric drive vehicles equipped with a traction battery pack and BSE capabilities. The battery cell assembly includes a battery housing with an electrolyte composition stored within the battery housing. The electrolyte composition transports ions between working electrodes. A first working (anode) electrode is attached to the battery housing in electrochemical contact with the electrolyte composition. Likewise, a second working (cathode) electrode is attached to the battery housing in electrochemical contact with the electrolyte composition. A reference electrode is interposed between the first and second working electrodes, placed in electrochemical contact with the electrolyte composition. The reference electrode and one or both working electrodes cooperate to output a half-cell voltage signal that is indicative of a battery state of the battery cell assembly.

CN 111 063 939 A provides a three-electrode battery and a preparation method thereof. The preparation method comprises the following steps: first tabs are connected to a positive tab and a negative tab of a charged battery cell body respectively, and the first tabs are partially exposed out of a battery shell; a reference electrode is coated with a diaphragm and connected with a second tab, part of the second tab is exposed out of the battery shell, the diaphragm is arranged in the battery shell, and the reference electrode and the charged battery cell body are kept in a non-contact state; and the three-electrode battery is packaged, then electrolyte is injected, and the injection coefficient of the electrolyte is 1.5-3 g/Ah; and then shelving aging and secondary sealing processes are carried out to finish the preparation of the three-electrode battery.

### Disclosure of the Invention

### Technical Goals

The present disclosure relates to a three-electrode battery and a performance analysis system using the same, and is to provide a three-electrode battery in which electrode pitting and internal short circuits are suppressed, and a performance analysis system using the same.

The technical problems to be achieved by the present disclosure are not limited to the technical problems mentioned above, and other technical problems not mentioned will be clearly understood by those skilled in the art from the description below.

### Technical Solutions

A three-electrode battery of the present disclosure includes
a main separator (120);
a film-shaped reference electrode (110) stacked on one side of the main separator (120);
an auxiliary separator (130) stacked on the one side of the main separator (120) with the reference electrode (110) interposed between the main separator (120) and the auxiliary separator (130);
a first electrode (140) and a second electrode (150) stacked with the main separator (120), the reference electrode (110), and the auxiliary separator (130) interposed therebetween; and
a battery case (160) in which the main separator (120), the reference electrode (110), the auxiliary separator (130), the first electrode (140), and the second electrode (150) are accommodated in an inner space of the battery case, wherein
in the three-electrode battery of the present disclosure, the reference electrode is formed with a plurality of perforated holes (113) and
wherein the reference electrode (110) comprises:
   a first region (A1) facing the first electrode (140) or the second electrode (150); and
   a second region (A2) protruding from one side of the first electrode (140) or the second electrode (150), and
   wherein the plurality of perforated holes (113) are formed in the first region (a1).

A performance analysis system of the present disclosure using the three-electrode battery of the present disclosure includes
a working electrode connecting part connected to the first electrode (140) to measure an electrode potential of the first electrode (140);
a counter electrode connecting part connected to the second electrode (150);
a reference electrode connecting part connected to the reference electrode (110); and
a measuring part connected to the working electrode connecting part, the counter electrode connecting part, and the reference electrode connecting part to measure the potential of the first electrode (140).

### Advantageous Effects

According to a three-electrode battery and a performance analysis system using the same of the present disclosure, it is possible to minimize the area of the blocking area due to the reference electrode, and suppress occurrence of circuit problems such as internal short circuit or electrode damage such as electrode pitting due to changes in battery internal pressure.

The three-electrode battery of the present disclosure and performance analysis system using the same may be capable of highly reliable separation analysis of the cathode/anode regardless of the electrode's own physical properties and whether or not the electrode is operated.

The three-electrode battery of the present disclosure may be advantageous for analysis of Si/SiO batteries with significant thickness changes or long-term degradation analysis.

In the three-electrode battery of the present disclosure, an effect of reducing three-electrode deviation can be expected due to the reduction of the blocking area.

The three-electrode battery of the present disclosure has a structure that is easy to design for a medium or large-sized battery, and can be applied regardless of the stack or area of electrodes.

### Brief Description of Drawings

FIG. 1 is a conceptual diagram illustrating a conventional three-electrode battery.
FIG. 2 is a cross-sectional view illustrating a conventional three-electrode battery.
FIG. 3 is a cross-sectional view illustrating a three-electrode battery of the present disclosure.
FIG. 4 is an exploded perspective view illustrating a stacked structure of a three-electrode battery of the present disclosure.
FIG. 5 is a plan view illustrating a disposition relationship between a first electrode and a reference electrode.
FIG. 6 is a graph illustrating battery characteristics according to an open ratio of a first region.
FIGS. 7a to 7c are photographs illustrating a state of a battery electrode according to a reference electrode.
FIG. 8 is a graph illustrating depth of charge at 1C charge and 2C charge.

### Best Mode for Carrying Out the Invention

A three-electrode battery of the present disclosure includes
a main separator (120);
a film-shaped reference electrode (110) stacked on one side of the main separator (120);
an auxiliary separator (130) stacked on the one side of the main separator (120) with the reference electrode (110) interposed between the main separator (120) and the auxiliary separator (130);
a first electrode (140) and a second electrode (150) stacked with the main separator (120), the reference electrode (110), and the auxiliary separator (130) interposed therebetween; and
a battery case (160) in which the main separator (120), the reference electrode (110), the auxiliary separator (130), the first electrode (140), and the second electrode (150) are accommodated in an inner space of the battery case, wherein the reference electrode (110) is formed with a plurality of perforated holes (113) and
wherein the reference electrode (110) comprises:
   a first region (A1) facing the first electrode (140) or the second electrode (150); and
   a second region (A2) protruding from one side of the first electrode (140) or the second electrode (150), and
   wherein the plurality of perforated holes (113) are formed in the first region (a1).

The three-electrode battery of the present disclosure may further include a reference electrode lead (115) having one end fused to the second region (A2) of the reference electrode (110) and the other end protruding out of the battery case (160).

In the three-electrode battery of the present disclosure, the first electrode (140) or the second electrode (150) may be provided in a rectangular shape having a first direction and a second direction orthogonal to each other as corners, when a length of the first electrode or the second electrode in the first direction is formed to be longer than a length in the second direction, a length (Wr) of the first region (A1) in the first direction may be formed to be 1% to 3% of the length (FL) of the first electrode (140) or the second electrode (150) in the first direction, and a length (Lr) of the first region (A1) in the second direction may be formed to be 5% to 95% of the length (Fw) of the first electrode (140) or the second electrode (150) in the second direction.

In the three-electrode battery of the present disclosure, the reference electrode (110) may include a foil member (111) forming a body of the reference electrode, and a reference electrode active material (112) coated on the foil member (111).

In the three-electrode battery of the present disclosure, a material of the foil member (111) may include at least one of Cu-foil and Al-foil.

In the three-electrode battery of the present disclosure, the reference electrode active material (112) may be selected from LTO (Li₄Ti₅O₁₂), LFP (LiFePO₄), Li metal, and combinations thereof.

A performance analysis system of the present disclosure using the three-electrode battery of the present disclosure includes
a working electrode connecting part connected to the first electrode (140) to measure an electrode potential of the first electrode (140);
a counter electrode connecting part connected to the second electrode (150);
a reference electrode connecting part connected to the reference electrode (110); and
a measuring part connected to the working electrode connecting part, the counter electrode connecting part, and the reference electrode connecting part to measure the potential of the first electrode (140).

### Modes for Carrying Out the Invention

Hereinafter, with reference to the accompanying drawings, embodiments according to the present disclosure will be described in detail. In this process, the size or shape of the components shown in the drawings may be exaggerated for clarity and convenience of description. In addition, in consideration of the configuration and operation of the present disclosure, specially defined terms may vary depending on the intentions or practices of users and operators. Definitions of these terms should be based on the content throughout this specification.

In the description of the present disclosure, it should be noted that an orientation or positional relationship indicated by the terms "center", "top", "bottom", "left", "right", "vertical", "horizontal", "inside", "outside", "one side", "other side", and the like, is based on an orientation or positional relationship shown in the drawings, or an orientation or positional relationship that is usually placed when using a product of the present disclosure, and is intended only for explanation and brief description of the present disclosure, and is not to be construed as limiting the present disclosure because it does not suggest or imply that a device or element shown should necessarily be configured or operated in a specific orientation with a specific orientation.

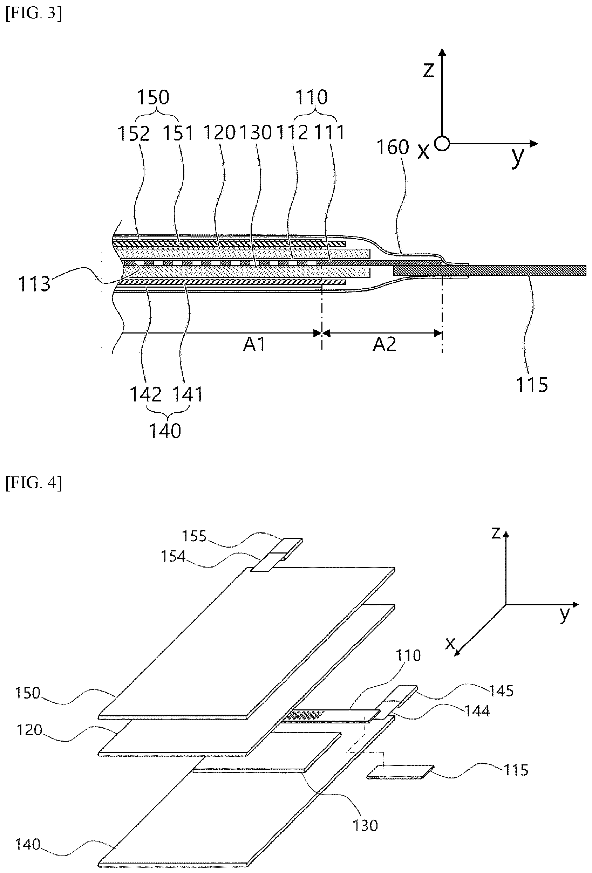

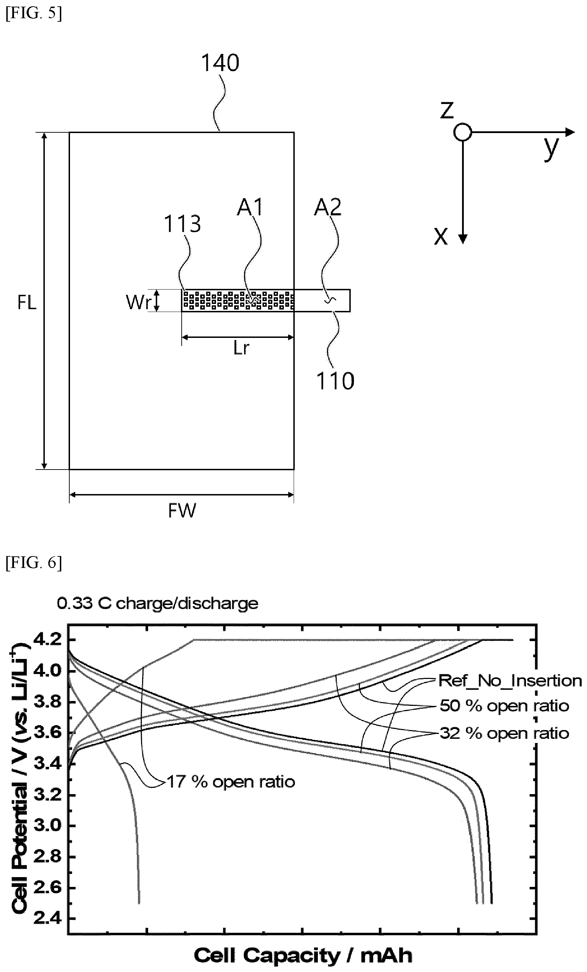

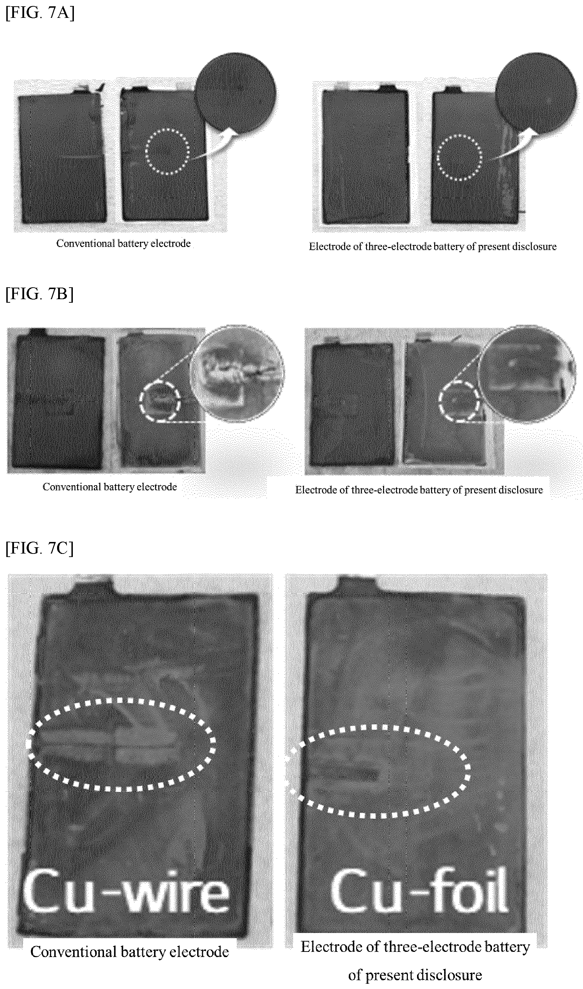

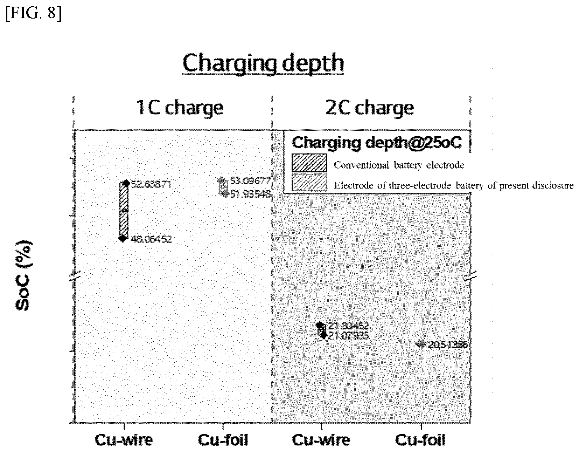

FIG. 3 is a cross-sectional view illustrating a three-electrode battery of the present disclosure. FIG. 4 is an exploded perspective view illustrating a stacked structure of a three-electrode battery of the present disclosure. FIG. 5 is a plan view illustrating a disposition relationship between a first electrode 140 and a reference electrode 110. FIG. 6 is a graph illustrating battery characteristics according to an open ratio of a first region 110. FIGS. 7a to 7c are photographs illustrating a state of a battery electrode according to the reference electrode 110. FIG. 8 is a graph illustrating charging depth at 1C charge and 2C charge.

Hereinafter, the three-electrode battery of the present disclosure will be described in detail with reference to FIGS. 3 to 8. In the xyz coordinate system shown in FIGS. 3 to 5, an x-axis direction may be a first direction, a y-axis direction may be a second direction, and a z-axis direction may be a vertical direction.

The three-electrode battery of the present disclosure can be applied to various types of batteries, but may be optimized for a pouch type battery.

As shown in FIG. 3, the three-electrode battery of the present disclosure includes
a main separator 120;
a film-shaped reference electrode 110 stacked on one side of the main separator 120;
an auxiliary separator 130 stacked on the one side of the main separator 120 with the reference electrode 110 interposed between the main separator 120 and the auxiliary separator 130;
a first electrode 140 and a second electrode 150 stacked with the main separator 120, the reference electrode 110, and the auxiliary separator 130 interposed therebetween; and
a battery case 160 in which the main separator 120, the reference electrode 110, the auxiliary separator 130, the first electrode 140, and the second electrode 150 are accommodated in an inner space of the battery case.

One of the first electrode 140 and the second electrode 150 may be formed as a cathode, and the other may be formed as an anode.

As shown in FIGS. 3 and 4, the first electrode 140 may include a first electrode current collector 141, a first electrode active material 142 applied to the surface of the first electrode current collector 141, a first electrode tab 144 welded to an uncoated portion of the first electrode current collector 141 on which the first electrode active material 142 is not coated, and a first electrode lead 145 having one end welded to the first electrode tab 144 inside the battery case 160 and the other end protruding out of the battery case 160. The second electrode 150 may also include a second electrode current collector 151, a second electrode active material 152 applied to the surface of the second electrode current collector 151, a second electrode tab 154 welded to an uncoated portion of the second electrode current collector 151 on which the second electrode active material 152 is not coated, and a second electrode lead 155 having one end welded to the second electrode tab 154 inside the battery case 160 and the other end protruding out of the battery case 160.

The material of the main separator 120 and auxiliary separator 130 may include at least one of ethylene homopolymer, propylene homopolymer, ethylene/butene copolymer, ethylene/hexene copolymer, and ethylene/methacrylate copolymer.

The main separator 120 may be located between the first electrode 140 and the second electrode 150.

The main separator 120, the first electrode 140, and the second electrode 150 may be provided in plurality, respectively, and in this case, the auxiliary separator 130 and the reference electrode 110 may be provided on one of the plurality of main separators 120.

Each of the main separator 120, the first electrode 140, and the second electrode 150 may be provided in a sheet shape and stacked so as to cross each other.

The auxiliary separator 130 may be formed in a size capable of covering the reference electrode 110 so that the reference electrode 110 does not directly contact the first electrode 140 or the second electrode 150.

As shown in FIG. 4, the three-electrode battery of the present disclosure may be completed by injecting an electrolyte together with an electrode assembly formed by stacking the second electrode 150, the main separator 120, the reference electrode 110, the auxiliary separator 130, and the first electrode 140 in this order, or the first electrode 140, the auxiliary separator 130, the reference electrode 110, the main separator 120, and the second electrode 150 in this order into the battery case 160 and then sealing the battery case 160.

At this time, when the first electrode 140 and the second electrode 150 are provided in plurality, respectively, the first electrode tab 144 welded to each of the plurality of first electrodes 140 may be welded to one first electrode lead 145, the second electrode tab 154 welded to each of the plurality of second electrodes 150 may be welded to one second electrode lead 155, and one end of the first electrode lead 145 and one end of the second electrode lead 155 may protrude out of the battery case 160.

In the three-electrode battery of the present disclosure, the reference electrode 110 has a plurality of perforated holes 113 formed therein. By forming a plurality of perforated holes 113 in the reference electrode 110, it is possible to prevent the reference electrode 110 from interfering with the movement of ions between the first electrode 140 and the second electrode 150 and suppress the formation of a blocking area.

As shown in FIGS. 3 and 5, the reference electrode 110 includes a first region A1 facing the first electrode 140 or the second electrode 150, and a second region A2 protruding from one side of the first electrode 140 or the second electrode 150, wherein the plurality of perforated holes 113 are formed in the first region A1. In other words, the first region A1 may be used to establish a standard for the potential applied to the first electrode 140 or the second electrode 150, and the second region A2 may be used for electrical connection.

The total area of the plurality of perforated holes 113 may be formed to be 30% to 70% of the area of the first region A1. In other words, the total area of the plurality of perforated holes 113 may be formed to be 30% to 70% of the area of the first region A1. When the open ratio is 30% or less in the first region A1, ion diffusion may not be smooth, and when it is 70% or more, the reference electrode may be broken. Therefore, the open ratio formed by the plurality of perforated holes 113 in the first region A1 may be preferably 30% to 70%.

FIG. 6 is a graph illustrating battery characteristics according to an open ratio of a first region. Specifically, for a battery including an electrode assembly stacked in the order of a cathode, a separator, and an anode, it is a graph showing battery characteristics according to the open ratio of the test foil after inserting a test foil having a perforated hole between the separator and the anode. Four batteries were prepared, and test foils having open ratio of 17%, 32%, and 50% were inserted into three batteries, respectively, and the test foil was not inserted into the other battery. As shown in FIG. 7, it can be seen that while the battery provided with the test foil having less than 30% open ratio (17% open ratio) appear to have impaired ion migration, the battery provided with the test foil having an open ration of 30% or more (32% and 50% open ratio) exhibits behavior similar to that of the secondary battery without the test foil itself.

The three-electrode battery of the present disclosure may further include a reference electrode lead 115 having one end fused to the second region A2 of the reference electrode 110 and the other end protruding out of the battery case 160. Since the reference electrode 110 may be formed of a thin metal film or foil, it may not be fused to seal the battery case 160 or have minimal rigidity for connection to an external electric terminal. Accordingly, the reference electrode lead 115, which is a conductor for electrical connection, may be connected to the reference electrode 110, and the reference electrode lead 115 may be welded to the second region A2.

The reference electrode 110 may be provided with a thickness of 45 µm to 120 µm. The thickness of the reference electrode 110 may be determined in consideration of a lifting phenomenon between the first electrode 140 and the second electrode 150, a dent phenomenon caused by shock or vibration applied to the three-electrode battery itself, and the like.

As shown in FIG. 5, in the three-electrode battery of the present disclosure, the first electrode 140 or the second electrode 150 may be provided in a rectangular shape having first and second directions orthogonal to each other as corners. More specifically, the length of the first electrode 140 or the second electrode 150 in the first direction may be longer than the length in the second direction.

At this time, the length Wr of the first region A1 in the first direction may be formed 1% to 3% of the length FL of the first electrode 140 or the second electrode 150 in the first direction, and the length Lr of the first region A1 in the second direction may be formed 5% to 95% of the length Fw of the first electrode 140 or the second electrode 150 in the second direction. The length Lr of the first region A1 in the second direction may be determined in consideration of specifications, materials, number of layers, and types of layers of the first electrode or the second electrode.

In other words, the reference electrode 110 may be provided in a shape extending in a direction perpendicular to the longitudinal direction of the first electrode 140 or the second electrode 150.

As shown in FIG. 3, the reference electrode 110 may include a foil member 111 forming a body and a reference electrode active material 112 coated on the foil member 111. The reference electrode active material 112 may be applied to the first region A1, and the second region A2 may be formed as an uncoated portion where the reference electrode active material 112 is not applied. For example, the width of the first region A1 and the second region A2 in the first direction may be formed 2 mm, and the length in the second direction may be formed 15 mm for the first region A1 and 3 mm for the second region A2.

The material of the foil member 111 may include at least one of Cu-foil and Al-foil, and the reference electrode active material 112 may be selected from LTO (Li₄Ti₅O₁₂), LFP (LiFePO₄), Li metal, and combinations thereof.

The performance analysis system using the three-electrode battery of the present disclosure includes
a working electrode connecting part connected to the first electrode 140 to measure an electrode potential of the first electrode 140;
a counter electrode connecting part connected to the second electrode 150;
a reference electrode connecting part connected to the reference electrode 110; and
a measuring part connected to the working electrode connecting part, the counter electrode connecting part, and the reference electrode connecting part to measure the potential of the first electrode 140.

As the first electrode 140, one of a cathode and an anode may be selected according to the analysis purpose.

FIGS. 7a to 7c are photographs of electrode surfaces in a battery when the reference electrode 110 of the three-electrode battery of the present disclosure is applied and when a conventional wire-type reference electrode is applied. In FIGS. 7a to 7c, on the left, a conventional wire-type reference electrode is applied, and on the right, the reference electrode 110 of the present disclosure is applied.

FIG. 7a is an electrode extracted from a battery with 100% state of charge (SoC). It can be seen that the unreacted area is observed in the conventional type, but the electrode of the three-electrode battery of the present disclosure does not have an unreacted area.

FIG. 7B is an electrode extracted from a battery applied with 1C/1C, 20 cycles of charging and discharging. In the conventional type, it can be seen that Li precipitation is nonuniform in the vicinity of the wire-type reference electrode.

FIG. 7C is a photograph extracted from a battery dedicated to fast charge. In the conventional type, precipitation deepening occurs in the area adjacent to the wire-type reference electrode, but in the electrode of the three-electrode battery of the present disclosure, precipitation in the area adjacent to the reference electrode 110 is alleviated.

FIG. 8 is a graph illustrating charging depth at 1C charge and 2C charge. It can be seen that the three-electrode battery of the present disclosure has a reduced variation in charging depth compared to the conventional battery.

### <Explanation of Symbols>

110... Reference electrode, 111...Foil member, 112...Reference electrode active material, 113...Perforated hole, 115...Reference electrode lead, 120...Main separator, 130... Auxiliary separator, 140...First electrode, 141...First electrode current collector, 142...First electrode active material, 144...First electrode tab, 145...First electrode lead, 150...Second electrode, 151...Second electrode current collector, 152...Second electrode active material, 154...Second electrode tab, 155...Second electrode lead, 160...Battery case, A1...First region, A2... Second region

### Industrial Applicability

According to a three-electrode battery and performance analysis system using the same of the present disclosure, it is possible to minimize the area of the blocking area due to the reference electrode, and suppress the occurrence of circuit problems such as internal short circuit or electrode damage such as electrode pitting due to changes in battery internal pressure.

The three-electrode battery of the present disclosure and a performance analysis system using the same may be capable of highly reliable separation analysis of the cathode/anode regardless of the electrode's own physical properties and whether or not it is operated.

The three-electrode battery of the present disclosure may be advantageous for analysis of Si/SiO batteries with significant thickness changes or long-term degradation analysis.

In the three-electrode battery of the present disclosure, the effect of reducing the three-electrode deviation can be expected due to the reduction of the blocking area.

The three-electrode battery of the present disclosure has a structure that is easy to design for a medium or large-sized battery, and can be applied regardless of the stack or area of electrodes.

## Claims

1. A three-electrode battery comprising:
a main separator (120);
a film-shaped reference electrode (110) stacked on one side of the main separator (120);
an auxiliary separator (130) stacked on the one side of the main separator (120) with the reference electrode (110) interposed between the main separator (120) and the auxiliary separator (130);
a first electrode (140) and a second electrode (150) stacked with the main separator (120), the reference electrode (110), and the auxiliary separator (130) interposed therebetween; and
a battery case (160) in which the main separator (120), the reference electrode (110), the auxiliary separator (130), the first electrode (140), and the second electrode (150) are accommodated in an inner space of the battery case,
wherein the reference electrode (110) is formed with a plurality of perforated holes (113) and
wherein the reference electrode (110) comprises:
a first region (A1) facing the first electrode (140) or the second electrode (150); and
a second region (A2) protruding from one side of the first electrode (140) or the second electrode (150), and
wherein the plurality of perforated holes (113) are formed in the first region (a1).

2. The three-electrode battery of claim 1, further comprising:
a reference electrode lead (115) having one end fused to the second region (A2) of the reference electrode (110) and the other end protruding out of the battery case (160).

3. The three-electrode battery of claim 1, wherein a total area of the plurality of perforated holes (113) is formed to be 30% to 70% of the area of the first region (A1).

4. The three-electrode battery of claim 1, wherein the first electrode (140) or the second electrode (150) is provided in a rectangular shape having a first direction and a second direction orthogonal to each other as corners, and
when a length of the first electrode or the second electrode in the first direction is formed to be longer than a length in the second direction,
a length (Wr) of the first region (A1) in the first direction is formed to be 1% to 3% of the length (FL) of the first electrode (140) or the second electrode (150) in the first direction, and
a length (Lr) of the first region (A1) in the second direction is formed to be 5% to 95% of the length (Fw) of the first electrode (140) or the second electrode (150) in the second direction.

5. The three-electrode battery of claim 1, wherein the reference electrode (110) comprises:
a foil member (111) forming a body of the reference electrode, and
a reference electrode active material (112) coated on the foil member (111).

6. The three-electrode battery of claim 5, wherein a material of the foil member (111) comprises at least one of Cu-foil and Al-foil.

7. The three-electrode battery of claim 5, wherein the reference electrode active material (112) is selected from LTO (Li₄Ti₅O₁₂), LFP (LiFePO₄), Li metal, and combinations thereof.

8. A performance analysis system using the three-electrode battery of anyone of claims 1-7, comprising:
a working electrode connecting part connected to the first electrode (140) to measure an electrode potential of the first electrode (140);
a counter electrode connecting part connected to the second electrode (150);
a reference electrode connecting part connected to the reference electrode (110); and
a measuring part connected to the working electrode connecting part, the counter electrode connecting part, and the reference electrode connecting part to measure the potential of the first electrode (140).

## Patentansprüche

1. Dreielektrodenbatterie, umfassend:
einen Hauptseparator (120);
eine filmförmige Referenzelektrode (110), die auf einer Seite des Hauptseparators (120) gestapelt ist;
einen Hilfsseparator (130), der auf der einen Seite des Hauptseparators (120) gestapelt ist, wobei die Referenzelektrode (110) zwischen dem Hauptseparator (120) und dem Hilfsseparator (130) angeordnet ist;
eine erste Elektrode (140) und eine zweite Elektrode (150), die gestapelt sind, wobei der Hauptseparator (120), die Referenzelektrode (110) und der Hilfsseparator (130) dazwischen angeordnet sind; und
ein Batteriegehäuse (160), in dem der Hauptseparator (120), die Referenzelektrode (110), der Hilfsseparator (130), die erste Elektrode (140) und die zweite Elektrode (150) in einem Innenraum des Batteriegehäuses untergebracht sind,
wobei die Referenzelektrode (110) mit einer Vielzahl von perforierten Löchern (113) ausgebildet ist und
wobei die Referenzelektrode (110) umfasst:
einen ersten Bereich (A1), der der ersten Elektrode (140) oder der zweiten Elektrode (150) zugewandt ist; und
einen zweiten Bereich (A2), der von einer Seite der ersten Elektrode (140) oder der zweiten Elektrode (150) vorsteht, und
wobei die Vielzahl von perforierten Löchern (113) in dem ersten Bereich (a1) ausgebildet ist.

2. Dreielektrodenbatterie nach Anspruch 1, ferner umfassend:
eine Referenzelektrodenleitung (115), deren eines Ende mit dem zweiten Bereich (A2) der Referenzelektrode (110) verschmolzen ist und deren anderes Ende aus dem Batteriegehäuse (160) vorsteht.

3. Dreielektrodenbatterie nach Anspruch 1, bei der eine Gesamtfläche der Vielzahl von perforierten Löchern (113) so ausgebildet ist, dass sie 30% bis 70% der Fläche des ersten Bereichs (A1) beträgt.

4. Dreielektrodenbatterie nach Anspruch 1, bei der die erste Elektrode (140) oder die zweite Elektrode (150) in einer rechteckigen Form mit einer ersten Richtung und einer zweiten Richtung orthogonal zueinander als Ecken vorgesehen ist, und
wenn eine Länge der ersten Elektrode oder der zweiten Elektrode in der ersten Richtung so ausgebildet ist, dass sie länger als eine Länge in der zweiten Richtung ist,
eine Länge (Wr) des ersten Bereichs (A1) in der ersten Richtung so ausgebildet ist, dass sie 1% bis 3% der Länge (FL) der ersten Elektrode (140) oder der zweiten Elektrode (150) in der ersten Richtung beträgt, und
eine Länge (Lr) des ersten Bereichs (A1) in der zweiten Richtung so ausgebildet ist, dass sie 5% bis 95% der Länge (Fw) der ersten Elektrode (140) oder der zweiten Elektrode (150) in der zweiten Richtung beträgt.

5. Dreielektrodenbatterie nach Anspruch 1, bei der die Referenzelektrode (110) umfasst:
ein Folienelement (111), das einen Körper der Referenzelektrode bildet, und ein Referenzelektrodenaktivmaterial (112), das auf das Folienelement (111) beschichtet ist.

6. Dreielektrodenbatterie nach Anspruch 5, bei der ein Material des Folienelements (111) mindestens eines von Cu-Folie und Al-Folie umfasst.

7. Dreielektrodenbatterie nach Anspruch 5, bei der das Referenzelektrodenaktivmaterial (112) ausgewählt ist aus LTO (Li₄Ti₅O₁₂), LFP (LiFePO₄), Li-Metall und Kombinationen davon.

8. Leistungsanalysesystem, das die Dreielektrodenbatterie nach einem der Ansprüche 1 bis 7 verwendet, umfassend:
einen Arbeitselektrodenverbindungsteil, der mit der ersten Elektrode (140) verbunden ist, um ein Elektrodenpotential der ersten Elektrode (140) zu messen;
einen Gegenelektrodenverbindungsteil, der mit der zweiten Elektrode (150) verbunden ist;
einen Referenzelektrodenverbindungsteil, der mit der Referenzelektrode (110) verbunden ist; und
einen Messteil, der mit dem Arbeitselektrodenverbindungsteil, dem Gegenelektrodenverbindungsteil und dem Referenzelektrodenverbindungsteil verbunden ist, um das Potential der ersten Elektrode (140) zu messen.

## Revendications

1. Batterie à trois électrodes comprenant :
un séparateur principal (120) ;
une électrode de référence en forme de film (110) empilée sur un côté du séparateur principal (120) ;
un séparateur auxiliaire (130) empilé sur un côté du séparateur principal (120) avec l'électrode de référence (110) intercalée entre le séparateur principal (120) et le séparateur auxiliaire (130);
une première électrode (140) et une deuxième électrode (150) empilées avec le séparateur principal (120), l'électrode de référence (110) et le séparateur auxiliaire (130) intercalés entre elles ; et
un boîtier de batterie (160) dans lequel le séparateur principal (120), l'électrode de référence (110), le séparateur auxiliaire (130), la première électrode (140) et la deuxième électrode (150) sont situés dans un espace intérieur du boîtier de batterie,
l'électrode de référence (110) étant réalisée avec une pluralité d'orifices perforés (113) et
l'électrode de référence (110) comprenant :
une première zone (A1) faisant face à la première électrode (140) ou à la deuxième électrode (150) ; et
une deuxième zone (A2) faisant saillie d'un côté de la première électrode (140) ou de la deuxième électrode (150), et
la pluralité d'orifices perforés (113) étant formés dans la première zone (a1).

2. Batterie à trois électrodes selon la revendication 1, comprenant en outre :
un conducteur d'électrode de référence (115), dont une extrémité est fusionnée à la seconde zone (A2) de l'électrode de référence (110), et l'autre extrémité dépasse du boîtier de batterie (160).

3. Batterie à trois électrodes selon la revendication 1, une superficie totale de la pluralité d'orifices perforés (113) étant formée pour constituer de 30 % à 70 % de la superficie de la première zone (A1).

4. Batterie à trois électrodes selon la revendication 1, la première électrode (140) ou la deuxième électrode (150) étant agencée avec une forme rectangulaire comportant une première direction et une deuxième direction perpendiculaires entre elles en tant que coins, et
lorsqu'une longueur de la première électrode ou de la deuxième électrode dans la première direction est formée pour être plus longue qu'une longueur dans la deuxième direction,
une longueur (Wr) de la première zone (A1) dans la première direction est formée pour mesurer de 1 % à 3 % de la longueur (FL) de la première électrode (140) ou de la deuxième électrode (150) dans la première direction, et
une longueur (Lr) de la première zone (A1) dans la deuxième direction est formée pour mesurer de 5 % à 95 % de la longueur (Fw) de la première électrode (140) ou de la deuxième électrode (150) dans la deuxième direction.

5. Batterie à trois électrodes selon la revendication 1, l'électrode de référence (110) comprenant :
un élément feuille (111) formant un corps de l'électrode de référence, et
un matériau actif d'électrode de référence (112) appliqué sur l'élément feuille (111).

6. Batterie à trois électrodes selon la revendication 5, un matériau de l'élément feuille (111) comprenant au moins une d'une feuille de Cu et d'une feuille d'Al.

7. Batterie à trois électrodes selon la revendication 5, le matériau actif de l'électrode de référence (112) étant sélectionné parmi LTO (Li₄Ti₅O₁₂ ), LFP (LiFePO₄), Li métal et des combinaisons de ces derniers.

8. Système d'analyse des performances utilisant la batterie à trois électrodes selon l'une quelconque des revendications1 à 7, comprenant :
une partie de connexion d'électrode de travail connectée à la première électrode (140) pour mesurer un potentiel d'électrode de la première électrode (140) ;
une partie de connexion de contre-électrode connectée à la deuxième électrode (150) ;
une partie de connexion d'électrode de référence connectée à l'électrode de référence (110) ; et
une partie de mesure connectée à la partie de connexion de l'électrode de travail, à la partie de connexion de la contre-électrode, et à la partie de connexion de l'électrode de référence pour mesurer le potentiel de la première électrode (140).
